# EUROPEAN PATENT SPECIFICATION

(11) **EP 3 198 791 B1**
(45) Date of publication and mention of the grant of the patent: **12.06.2019**
(21) Application number: 14789620.3
(22) Date of filing: 22.09.2014
(51) Int. Cl.: H04L 12/10, G06F 1/26, H04W 52/34, H04W 52/36

(54) **CASCADED RADIO COMMUNICATION SYSTEM**
KASKADIERTES FUNKKOMMUNIKATIONSSYSTEM
SYSTÈME DE COMMUNICATIONS RADIO EN CASCADE

(43) Date of publication of application: 02.08.2017
(73) Proprietor: Telefonaktiebolaget LM Ericsson (publ), 164 83 Stockholm (SE)
(72) Inventor: ZAINALDIN, Ahmed, Ottawa, Ontario K2J 0P2 (CA); ABU-FARHA, Najeh, Ottawa, Ontario K2C 4E5 (CA)
(74) Representative: Ericsson
(86) International application number: PCT/IB2014/064744
(87) International publication number: WO 2016/046597

(56) References cited:
- WO-A2-2006/052359
- US-A1- 2006 273 661
- US-A1- 2013 339 760

## Description

### TECHNICAL FIELD

A method, system and device for extending the range and coverage of wireless radio systems are disclosed.

### BACKGROUND

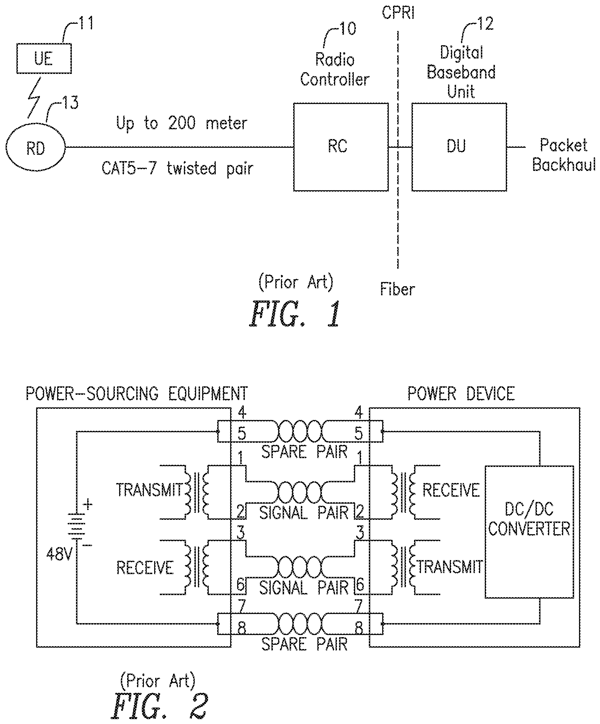

Current wireless communication network solutions, especially those used for indoor networks, include a radio controller which provides power and signaling over an Ethernet cable to and from a radio. This is shown in FIG. 1, where the radio controller (RC) 10 is connected to a backhaul network via a digital baseband unit (DU) 12 via a common public radio interface (CPRI) which may include a fiber connection. The radio controller 10 acts as a power sourcing equipment (PSE) to feed power to the radio device 13 over an Ethernet cable such as CAT 5, 6 or 7 that is ANSI-TIA-EIA 568 compliant. The radio controller 10 also supports communication with the radio device 13 over the Ethernet cable. Power can be delivered on such a cable to a radio unit up to about 200 meters away from the radio controller 10. The radio device 13 is a powered device (PD) that acts as a wireless access point to communicate wirelessly with user equipment (UE) such as mobile phones 11.

There are several common techniques for transmitting power over Ethernet cabling of which two have been standardized under Institute of Electrical and Electronic Engineers (IEEE) specification 802.3af and IEEE 802.3at. FIG. 2 is a schematic of a power sourcing equipment, such as the radio controller 10, which feeds power to, and supports communication with, a powered device, such as the radio device 13. In FIG. 2, power is transmitted on pairs 4/5 and 7/8, while communication such as data and signaling is carried on pairs 1/2 and 3/6. In another embodiment, since only two of the four pairs are needed for communication using IEEE 802.3 10/100 BASE-T, power may be transmitted on the same wiring pairs as the data communication. In this case power may be transmitted on the conductors carrying data and control signals by applying a common-mode voltage to each pair. Because Ethernet uses differential signaling, this does not interfere with data transmission. The common mode voltage is easily extracted using the center tap of the standard Ethernet pulse transformer.

In addition to standardizing existing practice for spare-pair and common-mode data pair power transmission, the IEEE Power over Ethernet (PoE) standards provide for signaling between the PSE and PD. This signaling allows the presence of a conformant device to be detected by the power source, and allows the device and source to negotiate the amount of power required or available.

As noted above, in current solutions, the radio device 13 can only be a maximum distance of about 200 meters from the radio controller 10. The maximum allowed continuous output power per cable in IEEE 802.3af is 15.40 Watt. Specification IEEE 802.3at establishes a 25.50 Watt capability.

There is a need to extend radio coverage to longer distances without increasing the number of radio controllers.

Document WO 2006/052359 A2 may be construed to disclose a method and apparatus for managing an Inline Power relationship between and among a first network device acting as power sourcing equipment (PSE) to provide Inline Power to a second Powered Device (PD) and a third device. In one aspect, the powered device(s) and the third device are powered (at least in part) by the PSE using inline power from at least one port (which may include more than one PSE) and they are powered over one or more sets of cables.

Document US 2013/339760 A1 may be construed to disclose a technique pertaining to adding a separate communication link between an intelligent midspan Power Source Equipment (PSE) device and a network device (or between the midspan PSE device and a powered device (PD)). This technique enable data communication from the network device to the intelligent midspan PSE device. The communication link provides a communication channel that the intelligent midspan PSE device may use to perform additional functions such as reallocating power, budgeting power, enabling or disabling Power over Ethernet (PoE) for a particular PD, prioritizing PoE management, and the like.

### SUMMARY

The invention is related to a first cascade radio device according to claim 1, a method according to claim 7 and a computer-readable medium according to claim 12. Further embodiments of the invention are defined by the dependent claims.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a block diagram of a known indoor radio system;
FIG. 2 is a schematic diagram of a power sourcing equipment and a power consuming device connected by Ethernet cable pairs;
FIG. 3 is a block diagram of a radio system using a cascade device to extend the range by which power can be delivered over an Ethernet cable to a radio device constructed in accordance with principles of the present invention;
FIG. 4 is a block diagram of a radio system with two cascade devices to further extend the range by which power can be delivered over an Ethernet cable to a radio device constructed in accordance with principles of the present invention;
FIG. 5 is a schematic of a cascade device constructed in accordance with principles of the present invention;
FIG. 6 is a block diagram of a cascade device constructed in accordance with principles of the present invention;
FIG. 7 illustrates a process for negotiating power for a radio device via an intervening cascade device in accordance with principles of the present invention;
FIG. 8 illustrates a process for re-negotiating power for a cascade device when a radio device is removed in accordance with principles of the present invention;
FIG. 9 illustrates a process for updating operation, administration and maintenance (OAM) information to a cascade device and radio device in accordance with principles of the present invention;
FIG. 10 is a flowchart of an exemplary process for negotiating power for a radio device in which the process is performed at a cascade device; and
FIG. 11 is a more detailed flowchart of an exemplary process for negotiating power for a radio device in which the process is performed at a cascade device.

### DETAILED DESCRIPTION

Before describing in detail exemplary embodiments that are in accordance with the present disclosure, it is noted that the embodiments reside primarily in combinations of apparatus components and processing steps related providing power over Ethernet in a radio communication system. Accordingly, the device system and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

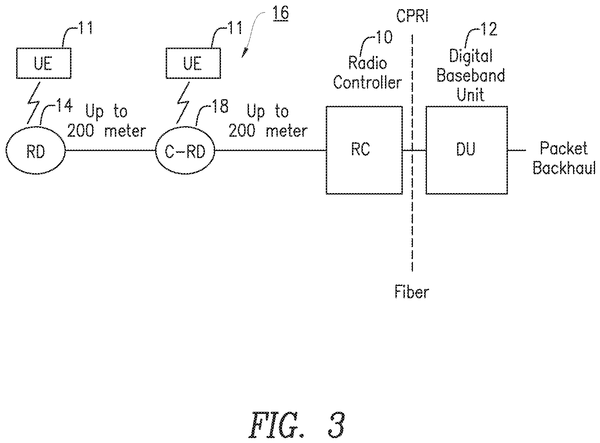

Returning now to the drawing figures, where like reference designators refer to like elements, there is shown in FIG. 3 a block diagram of a radio system 16 with a cascade device (C-RD) 18, which may or may not also include a radio, interposed between the radio device (RD) 14 and the radio controller (RC) 10. UEs 11 wirelessly communicate with RD 14 and C-RD 18. The cascade device 18 negotiates with the radio controller 10 to arrive at an amount of power to be delivered from the radio controller 10 to the radio unit 14 via the cascade device 18.

In one embodiment, the interposition of the cascade device 18 between the radio controller 10 and the radio device 14 enables an increase in the maximum distance between the radio device 14 and the radio controller 10 from about 200 meters to about 400 meters while maintaining compliance with IEEE power over Ethernet (PoE) and data communication standards. The cascade device 18 does not require local power since it is powered by the radio controller 10 over the Ethernet connection between the cascade device 18 and the radio controller 10. As will be explained below in more detail, if a longer range between the radio device 14 and the radio controller 10 is needed, additional cascade devices 18 may be interposed between the radio controller 10 and the radio device 14. Note that the system 16 can be used indoors and is suited for indoor applications since it extends range of power over Ethernet implementations, which are typically indoor installations. System 16 could readily be used in outdoor or indoor/outdoor applications that rely on power over Ethernet.

In some embodiments, the cascade device 18 includes a power amplifier to amplify an amount of power received from the radio controller 10 to be sent to the next downstream device, which may be a radio device or a cascade device with or without a radio. The cascading depth is limited only by the amount of power available from the radio controller 10. Different PoE standards are available to provide more or less power. Examples of these different PoE standards are shown in Table 1.

**Table 1**

| | **PoE** | **PoE Plus** | **UPOE** |
|---|---|---|---|
| Minimum cable type | Cat5e | Cat5e | Cat5e |
| IEEE standard definition | 802.3af | 802.3at | Proprietary |
| Maximum power per PSE port | 15.4W | 30W | 60W |
| Maximum power to PD | 12.95W | 25.5W | 51W |
| Twisted pair used | 2-pair | 2-pair | 4-pair |

Installing the cascade device 18 requires no set up steps once connected. The connections include two RJ45 network ports, and the cascade device may self-configure for 10/100/1000 BASE-T operation. Set up and operation of 10/100/1000 BASE-T networks are known and beyond the scope of this disclosure. Power over Ethernet (PoE) is automatically transferred between connected equipment according to a power negotiation process described below. No local power supply connection is required because the cascade device 18 is powered by power transmitted over the Ethernet cable from the power sourcing equipment.

The cascade device 18 may be located anywhere along the route of the Ethernet cable as long as no length of cable along the route is more than about 200 meters. For example, to extend the range between a radio controller 10 (containing the power sourcing equipment) and a radio device 14 to 300 meters, the cascade device 18 could be installed 100 meters from the radio controller 10 and 200 meters from the radio device 14.

In some embodiments, the cascade device 18 enables network range extension to any radio device that is compatible with IEEE 802.3af, which is a universal PoE standard for low power network devices. In addition, in some embodiments, the cascade device 18 is compatible with high power standards such as PoE Plus (IEEE 802.3at). For example, 4-pair PoE can be used for devices that require power of 60 Watts or more.

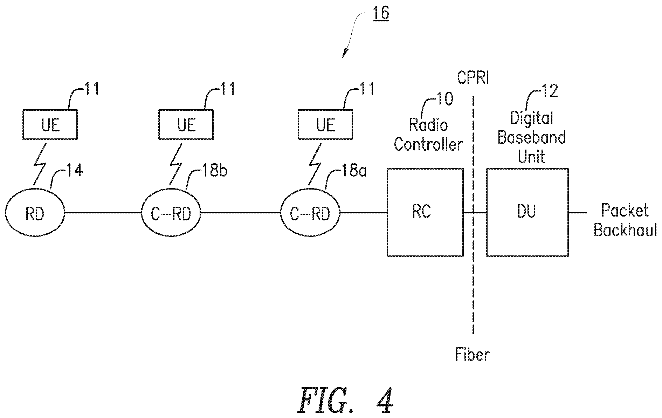

If an extension of the distance between the radio controller 10 and the radio device 14 beyond 400 meters is desired, more than one cascade device 18 may be installed in series. For example, as shown in FIG. 4, two cascade devices 18a and 18b, referred to collectively as cascade device 18, may be separated from each other by 200 meters and separated from the radio device 14 and the radio controller 10 by 200 meters, respectively, to achieve a total distance from the radio controller 10 to the radio device 14 of about 600 meters. The maximum extension distance depends on how much power is allocated to the radio device and the cascade device and how much power is available from the power sourcing equipment.

Thus, in some embodiments, a radio communication system 16 is provided that includes at least one radio device 14, a radio controller 10 and at least one cascade device 18 interposed between the radio device 14 and the radio controller 10. The radio controller 10 provides power on the Ethernet cable that connects the at least one radio device 14 and the at least one cascade device 18. The cascade device 18 negotiates and amount of power to be allocated to the cascade devices 18 and radio devices 14 in a chain of such devices.

Note that the full bandwidth of the Ethernet network is preserved from end to end since the cascade devices 18 relay signals destined to the end radio device 14. Note also that various cable standards may be employed. Note also that any one or more of the cascade devices 18 may also act as a radio device, i.e., include the functionality of a radio device 14, providing wireless access point functionality. Note further that when the cascade device 18 also includes a radio, the cascade device 18 may broadcast radio signals based on data and signaling received from the radio controller 10, which in turn receives radio signaling and data from the digital baseband unit 12. Conversely, radio signals received wirelessly by the radio device 14 may be communicated via the cascade device 18 and the radio controller 10 to the digital baseband unit 12.

The cascade device 18 negotiates with the radio controller 10 to achieve an allocation of power to the radio device 14. The power negotiation function allows the cascade device 18 to ask for the amount of power it needs in addition to the power needed by downstream devices (devices further from the radio controller 10) such as the radio device 14. In one embodiment, if the total amount of power requested exceeds the capacity of the PSE, the request may be rejected or the amount of power allocated may be determined by the capacity of the PSE.

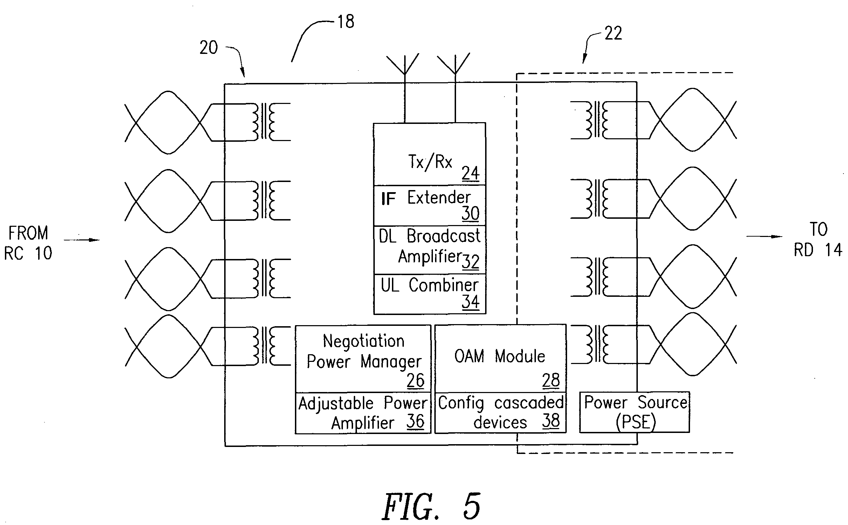

FIG. 5 is a schematic and block diagram of one embodiment of a cascade device 18 which receives power and signaling from a radio controller 10 or a cascade radio device via a first Ethernet interface 20 and transmits power and signaling to a radio device 14 or a cascade radio device and any other downstream devices via a second Ethernet interface 22. The cascade device 18 includes a transceiver 24, a power negotiation manager 26 and an OAM module 28. The transceiver 24 is included when the cascade device 18 serves as both a power signal/relay and a radio. The transceiver 24 includes an intermediate frequency (IF) extender 30, a downlink (DL) broadcast amplifier 32 and an uplink combiner 34. The transceiver 24 is configured to communicate wirelessly to user equipment (UE) in the area serviced by the transceiver 24 of the cascade device 18.

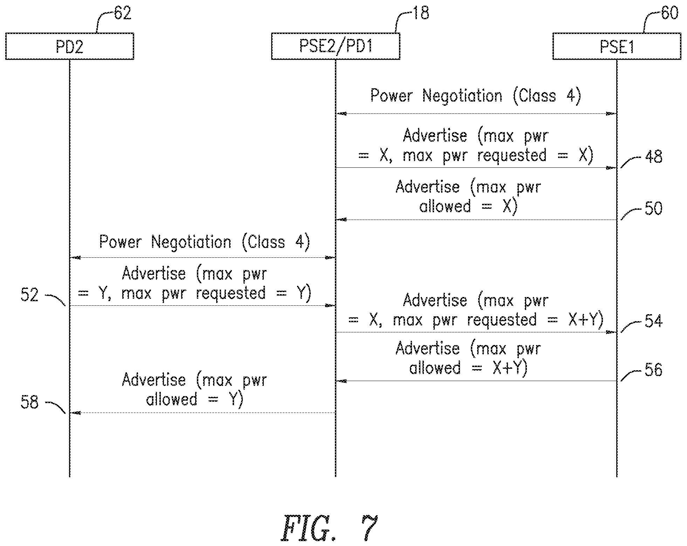

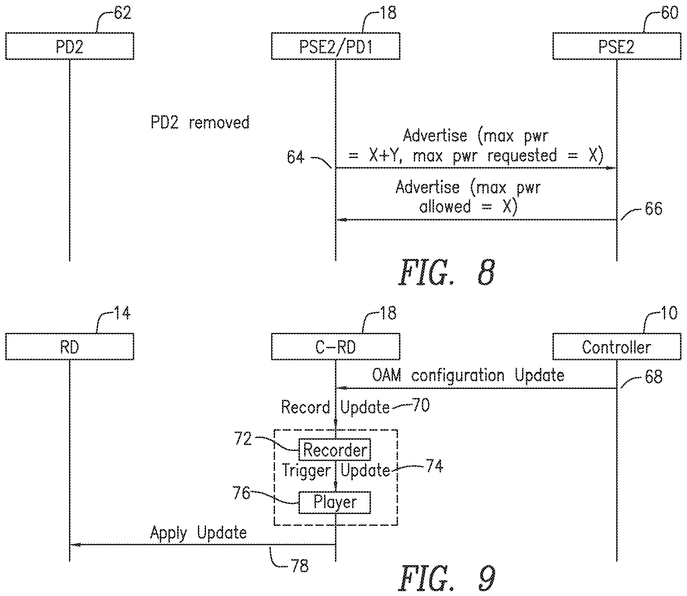

A purpose of the IF extender 30 is to provide downlink broadcast amplification and uplink combining capabilities. A purpose of the downlink broadcast amplifier 32 is to amplify the down link signal to be wirelessly transmitted by the downstream radio device in the chain. A purpose of the uplink combiner 34 is to combine signals from radio devices in the chain, e.g., other cascade devices 18 and other radio devices 14 that are to be forwarded to the digital baseband unit 12. The power negotiation manager 26 includes an adjustable power amplifier 36 which is adjustable to amplify power to be transmitted downstream to the radio device 14 at a negotiated level. In one embodiment, the power manager 26 also performs the power negotiation steps described below with reference to FIGS. 7 and 8. The OAM module 28 stores, i.e., records, cascade device OAM configuration data 38, which is played to downstream cascade devices as described above with reference to FIG. 9.

In some embodiments, the radio device 14 includes the hardware and functionality of the cascade device 18, i.e., the devices are the same. In this case, when the device is at the end of the downstream link, e.g., the radio device 14 in FIG. 4, the device functions as a radio device. However, when the device is positioned mid-link, such as cascade device 18a or cascade device 18b in FIG. 4, the device operates and functions as a cascade device 18. In other words, the cascade device 18 may be implemented by modifying a radio device 14 to include the power management functions and OAM functions described herein. Therefore, when a new cascade device is to be added to extend the range of power over Ethernet, the radio device 14 that was at the end of the chain operates as a cascade device 18.

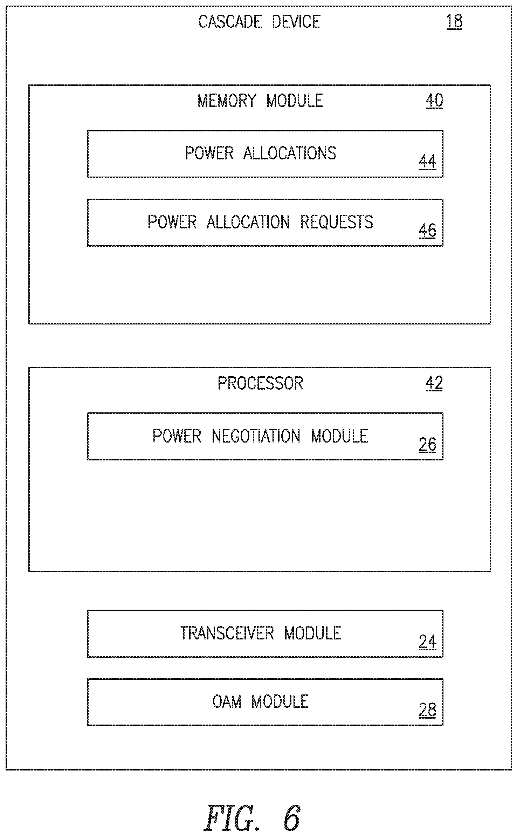

FIG. 6 is a functional block diagram of an exemplary cascade device 18 that employs a memory 40 and processor 42 to implement the cascade device functions described herein. The memory 40 stores power allocations 44 made by the radio controller 10 and power allocation requests 46 generated by the radio device 14 and the cascade device 18. The power allocation requests may include the sum of the power requested by the cascade device 18 and the power requested by additional downstream devices, such as the radio device 14. The processor 42 is programmable to perform the functions of the power negotiation manager 26 of FIG. 8. The functions of the power negotiation module 26 include the steps shown in, and described below with reference to, FIGS. 7 and 8.

Thus, negotiating power allocations to the cascade device 18 and the radio device 14 includes, when the radio device 14 is connected, sending the PSE a total requested power allocation that is the sum of the power allocation requested by the radio device a power allocation requested by the cascade device. When the radio device 14 is disconnected, the cascade device sends to the PSE an updated requested power allocation that includes only the power requested by the cascade device 18.

The cascade device 18 may also include the transceiver 24 and OAM module 28, as described above with reference to FIG. 8. In some embodiments, the OAM module 28 is separate from the processor 42, and in some embodiments, the OAM module 28 is implemented by the processor 42 operating under control of computer instructions. The processor 42 may cause the memory to save OAM configurations to be applied to the cascade device and to additional radio devices to be connected to the cascade device. Thus, the processor may extend the OAM configurations to a next cascade device in the chain. Extending the OAM configurations may include synchronizing cascade devices. Thus, the OAM module 28 is configured to record OAM information that specifies parameters of operation of the radio device 14 and the cascade devices 18 and forwards this OAM information to each successive device in the chain.

A power negotiation process is described with reference to FIG. 7. At start up, the cascade device 18 determines how much power the cascade device 18 needs for itself. In a first step 48, the cascade device 18 advertises to the power sourcing equipment (PSE1) 60 - which may typically be the radio controller 10 or another cascade device 18, e.g., the cascade device 18a in FIG. 4 - that the cascade device 18 is a power consuming device (PD1) and requests a maximum power of X Watts. In a second step 50, the PSE1 60 advertises to the cascade device 18 that the PSE1 10 is a PSE and that the maximum power of X Watts requested by the cascade device 18 is allocated to the cascade device 18.

When a new power consuming device PD2 62- which may be a radio device 14 - or another cascade device 18, e.g., the cascade device 18b in FIG. 4 - is connected, in step 52, the PD2 62 device advertises to the cascade device 18 that the PD2 62 requests a maximum power of Y Watts. In response, in step 54, the cascade device 18 advertises to the PSE1 10 that the maximum power requested is X + Y Watts - the sum of the maximum power requested by the PD2 62 and the cascade device 18. In step 56, the PSE1 60 advertises to the cascade device 18 that the maximum power allocated is X+Y Watts. In step 58, the cascade device 18 advertises to the PD2 62 that the cascade device 18 is a PSE and that the maximum power allocated to the PD2 62 is Y Watts. This negotiation of the power to be allocated to the cascade device 18 and to the PD2 62 is performed when the PD2 62 is first connected or when the cascade device 18 is first interposed between the PD2 62 and the PSE1 60. Note, therefore, that the cascade device 18 represents itself as a power consuming device to the PSE 10, and as a power sourcing equipment to the PD2.

Thus, in some embodiments, upon connecting the radio device 14, the cascade device 18 negotiates power allocations for the radio device 14 and the cascade device 18. Negotiating power allocations to the radio device 14 includes receiving a first message from the radio device 14, the first message indicating an amount of power requested by the radio device 14. The cascade device 18 sends to a PSE a second message, where the second message indicates a total amount of power that includes the amount of power requested by the radio device 14 and an amount of power to be allocated to the cascade device 18. In some embodiments, the negotiating power allocations to the radio device 14 from the first PSE further includes receiving at the cascade device 18 from the first PSE a third message. The third message indicates a total allocated power that includes a maximum power allocated to the radio device 14 and a maximum power allocated to the cascade device 18. The negotiating further includes transmitting by the cascade device 18 to the radio device 14 a fourth message, the fourth message indicating the maximum power allocated to the radio device 14.

Referring to FIG. 8, when the power consuming device PD2 62 is removed, in step 64, the cascade device 18 informs to the PSE1 60 that the requested power is X Watts, rather than X+Y Watts. In response, in step 66, the PSE1 60 advertises to the cascade device 18 that the allocated power is X Watts. This re-negotiation of the power to be allocated from the PSE1 60 is performed when the PD2 62 is removed. Thus, in some embodiments, upon disconnection of the PD2 62, the negotiating includes sending by the cascade device 18 to the PSE1 60 a fifth message requesting a new power allocation from the PSE1 60.

In addition to the advertised messages described above, in some embodiments, the radio controller 10 signals the cascade device 18 whether the radio controller supports 2 or 4 pairs of lines between the radio controller 10 and the cascade device 18. The radio controller 10 may further transmit a message indicating the power standard to which the radio controller 10 adheres. In some embodiments, the available power is based on the number of pairs of lines between the radio controller 10 and the cascade device 18. For example, the radio controller may adhere to a 15 Watt standard (two wire pairs) or a 60 Watt standard (four wire pairs). Likewise, the cascade device 18 may send a message to the radio device 14 indicating the applicable power standard.

In addition, operation, administration and maintenance (OAM) functions are extended from the radio controller 10 to the radio device 14 via the cascade device 18. These OAM functions may include startup and initialization functions, service configuration functions, fault management, software loading and upgrade, and plug and play functions. As shown in FIG. 9, in step 68, an OAM configuration update maybe provided to the cascade device 18 from the radio controller 10. The OAM configuration update is recorded, step 70, in an OAM recorder 72 of the cascade device 18. Upon a triggering event, step 74, an OAM player 76 of the cascade device 18 applies the update, step 78, to the radio device 14. A triggering event may include, for example, connection of a cascade device 18 or a radio device 14. In the event that there are more than one cascade device, the OAM information is propagated to each cascade device 18 in the chain.

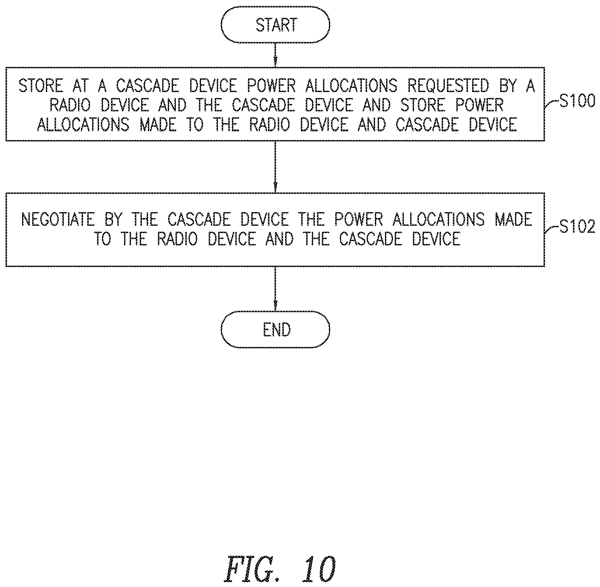

FIG. 10 is a flowchart of an exemplary process for power negotiation by a cascade device. Power allocations requested by the radio device 14 and the cascade device 18 are stored at the cascade device 18. Power levels actually allocated are also stored at the cascade device (block S100). Also, the power level allocated to the radio device 14 may be stored at the radio device 14. The cascade device 18 negotiates the power allocations made to the radio device 14 and the cascade device 18 (block S102), as described in FIGS. 5 and 6.

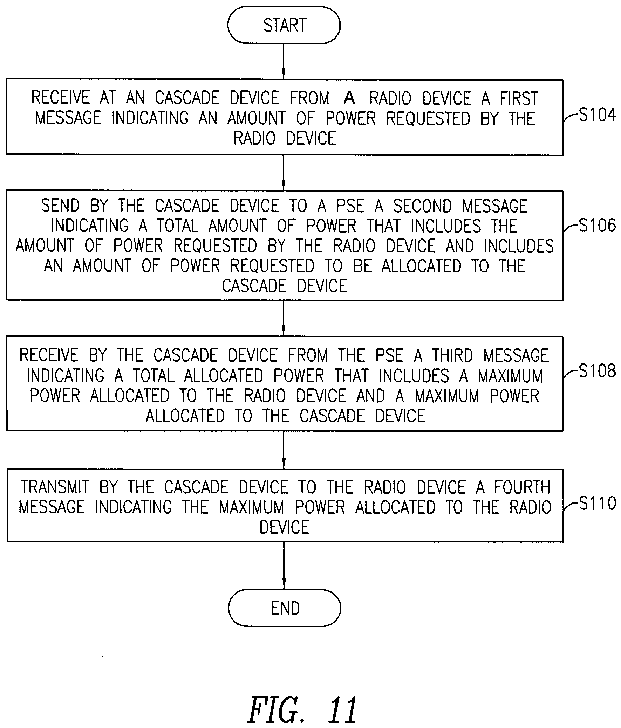

FIG. 11 is a more detailed flowchart of an exemplary process for power negotiation by a cascade device 18. The cascade device 18 receives from a radio device 14 a message indicating an amount of power requested by the radio device 14 (block S104). The cascade device 18 sends to a PSE such as the radio controller 10 a second message indicating a total amount of power that includes the amount of power requested by the radio device 14 and an amount of power requested to be allocated to the cascade device 18 (block S106). The cascade device 18 receives from the PSE a third message indicating a total allocated power that includes a maximum power allocated to the radio device 14 and allocated to the cascade device 18 (block S108). The cascade device 18 transmits a fourth message to the radio device 14 indicating the maximum power allocated to the radio device 14 (block S110).

The present invention can be realized in hardware, or a combination of hardware and software. Any kind of computing system, or other apparatus adapted for carrying out the methods described herein, is suited to perform the functions described herein. A typical combination of hardware and software could be a specialized computer system, having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile tangible storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A first cascade radio device, C-RD (18, 18a), for a system for providing power over Ethernet, PoE, cables to radio devices (14) in a wireless network to facilitate indoor wireless communications, the first C-RD being interposed between at least one radio device (14) and a radio controller, RC (19), the C-RD (18, 18a) being configured to negotiate an amount of power to be delivered by the RC (10) to the at least one radio device (14),
wherein the first C-RD (18, 18a) is configured to negotiate an amount of power to be delivered by the RC (10) to the at least one radio device (14) by:
receiving, at the first C-RD (18, 18a), from the at least one radio device (14) a first message, the first message indicating an amount of power requested by the at least one radio device (14);
sending, by the first C-RD (18, 18a) to the RC (10), a second message, the second message indicating a total amount of requested power that is the sum of the amount of power requested by the at least one radio device (14) and an amount of power requested by the first C-RD (18, 18a);
receiving, at the first C-RD (18, 18a) from the RC (10), a third message, the third message indicating a maximum power allocated to the at least one radio device (14) and a maximum power allocated to the first C-RD (18, 18a);
transmitting, by the first C-RD (18, 18a) to the at least one radio device (14), a fourth message, the fourth message indicating the maximum power allocated to the at least one radio device (14); and
when one of the at least one radio device (14) is disconnected, requesting by the first C-RD (18, 18a) an amount of power from the RC (10) equal to the total amount of requested power minus an amount of power previously requested by the disconnected one of the at least one radio device (14).

2. A system for providing power over Ethernet, PoE, cables to radio devices (14) in a wireless network to facilitate indoor wireless communications, the system comprising:
at least one radio device, RD (14);
a radio controller, RC (10), configured to provide power on an Ethernet cable to the at least one radio device (14); and
a first cascade radio device, C-RD (18, 18a), according to claim 1, interposed between the at least one radio device (14) and the RC (19).

3. The system of Claim 2, further comprising a second C-RD (18, 18b) interposed between the first C-RD (18, 18a) and the at least one radio device (14), the second C-RD (18, 18b) configured to negotiate an amount of power to be delivered by the RC (10) to the at least one radio device (14) and the second C-RD (18, 18b) via the first C-RD (18, 18a).

4. The system of Claim 2, wherein the first C-RD (18, 18a) further includes an administration and maintenance, OAM, extension module (28) that is configured to:
record operation OAM information concerning configuration of the at least one radio device (14); and
forward the OAM information to the at least one radio device (14) when the at least one radio device (14) is connected to the system.

5. The system of Claim 2, wherein:
- the first C-RD (18, 18a) includes a radio transceiver (24) and a power sourcing equipment, PSE, (22).

6. The system of Claim 2, wherein the negotiating is initiated when one of the at least one radio device (14) is first connected to the wireless network.

7. A method of negotiating power allocations provided via Ethernet cable from a first power sourcing equipment, PSE (60), to a radio device (14), the method comprising:
negotiating by a cascade device (19) the power allocations from the PSE (60) made to the radio device (14) and the cascade device (18, S102); and
storing at the cascade device (18) power allocations requested by the radio device (14) and the cascade device (18, S100), and power allocations made to the radio device (14) and the cascade device (18, S100),
wherein, upon connecting the radio device (14), negotiating power allocations to the radio device (14) includes receiving a first message from the radio device (14), the first message indicating an amount of power requested by the radio device (14, S104),
wherein negotiating power allocations to the radio device (14) from the first PSE (60) includes sending by the cascade device (18) to the first PSE (60) a second message, the second message indicating a total amount of power that includes the amount of power requested by the radio device (14, S106), and
wherein the negotiating power allocations to the radio device (14) from the first PSE (60) further includes:
- receiving at the cascade device (18) from the first PSE (60) a third message, the third message indicating a total allocated power that includes a maximum power allocated to the radio device (14) and a maximum power allocated to the cascade device (18, S108); and
- transmitting by the cascade device (18) to the radio device (14) a fourth message, the fourth message indicating the maximum power allocated to the radio device (14, S110),
wherein negotiating power allocations to the cascade device (18) and the radio device (14) includes sending to the PSE (60) a total requested power allocation that is a sum of a power allocation requested by the radio device (14) and a power allocation requested by the cascade device (18, S104))wherein, upon disconnecting the radio device (14), negotiating power allocations includes sending to the PSE (60) an updated total requested power allocation, the updated total requested power allocation including the total requested power allocation minus the power allocated to the radio device (14, 64).

8. The method of Claim 7, wherein the total amount of power includes a requested amount of power to be allocated to the cascade device (18, S106).

9. The method of Claim 7, wherein negotiating power allocations includes informing the radio device (14) of the maximum power allocated to the radio device (14, 58).

10. The method of Claim 7, further comprising, upon disconnection of the radio device (14), sending by the cascade device (18) to the first PSE (60) a fifth message requesting a new power allocation from the first PSE (60).

11. The method of Claim 7, further including:
recording by the cascade device (18) operation, administration and maintenance, OAM, information concerning configuration of the radio device (14); and
sending by the cascade device (18) to the radio device (14) the OAM information when the radio device (14) is connected to the cascade device (18).

12. A computer-readable medium comprising code portions which, when executed on a processor, configure the processor to perform all steps of a method according to any one of the preceding method claims.

## Patentansprüche

1. Erste Kaskaden-Funkvorrichtung, C-RD (18, 18a) für ein System zum Bereitstellen von Leistung über Ethernet, PoE,-Kabel für Funkvorrichtungen (14) in einem drahtlosen Netzwerk, um drahtlose Innenraumkommunikationen zu ermöglichen, wobei die erste C-RD zwischen mindestens eine Funkvorrichtung (14) und eine Funksteuerung, RC, (19) geschaltet ist, und die C-RD (18, 18a) konfiguriert ist zum Aushandeln einer Menge von Leistung, die von der RC (10) an die mindestens eine Funkvorrichtung (14) geliefert werden soll,
wobei die erste C-RD (18, 18a) so konfiguriert ist, dass sie eine Menge von Leistung, die von der RC (10) an die mindestens eine Funkvorrichtung (14) geliefert werden soll, aushandelt durch:
Empfangen einer ersten Nachricht an der C-RD (18, 18a) von der mindestens einen Funkvorrichtung (14), wobei die erste Nachricht eine Menge von Leistung angibt, die durch die mindestens eine Funkvorrichtung (14) angefordert wird;
Senden einer zweiten Nachricht von der ersten C-RD (18, 18a) an die RC (10), wobei die zweite Nachricht eine Gesamtmenge von angeforderter Leistung angibt, welche die Summe der durch die mindestens eine Funkvorrichtung (14) angeforderten Leistung und einer durch die erste C-RD (18, 18a) angeforderten Menge von Leistung ist;
Empfangen einer dritten Nachricht an der ersten C-RD (18, 18a) von der RC (10), wobei die dritte Nachricht eine der mindestens einen Funkvorrichtung (14) zugewiesene maximale Leistung und eine der ersten C-RD (18, 18a) zugewiesene maximale Leistung angibt;
Senden einer vierten Nachricht von der ersten C-RD (18, 18a) an die mindestens eine Funkvorrichtung (14), wobei die vierte Nachricht die maximale Leistung angibt, die der mindestens einen Funkvorrichtung (14) zugewiesen wird; und
Anfordern durch die erste C-RD (18, 18a), wenn eine der mindestens einen Funkvorrichtung (14) getrennt wird, einer Menge von Leistung von der RC (10) gleich der Gesamtmenge von angeforderter Leistung minus einer Menge von Leistung, die vorher durch die getrennte der mindestens einen Funkvorrichtung (14) angefordert wurde.

2. System zum Bereitstellen von Leistung über Ethernet, PoE,-Kabel für Funkvorrichtungen (14) in einem drahtlosen Netzwerk, um drahtlose Innenraumkommunikationen zu ermöglichen, wobei das System umfasst:
mindestens eine Funkvorrichtung (14);
eine Funksteuerung, RC (10), die zum Bereitstellen von Leistung auf einem Ethernet-Kabel für die mindestens eine Funkvorrichtung (14) konfiguriert ist; und
eine erste Kaskaden-Funkvorrichtung, C-RD (18, 18a), nach Anspruch 1, die zwischen die mindestens eine Funkvorrichtung (14) und die RC (19) geschaltet ist.

3. System nach Anspruch 2,
ferner umfassend eine zweite C-RD (18, 18b), die zwischen die erste C-RD (18, 18a) und die mindestens eine Funkvorrichtung (14) geschaltet ist, wobei die zweite C-RD (18, 18b) so konfiguriert, dass sie eine Menge von Leistung aushandelt, die von der RC (10) über die erste C-RD (18, 18a) an die mindestens eine Funkvorrichtung (14) und die zweite C-RD (18, 18b) geliefert werden soll.

4. System nach Anspruch 2,
wobei die erste C-RD (18, 18a) ferner ein Verwaltungs- und Wartungs, OAM,-Erweiterungsmodul (28) umfasst, das konfiguriert ist zum:
Aufzeichnen von Betriebs-OAM-Informationen in Bezug auf eine Konfiguration der mindestens einen Funkvorrichtung; und
Weiterleiten der OAM-Informationen an die mindestens eine Funkvorrichtung (14), wenn die mindestens eine Funkvorrichtung (14) an das System angeschlossen ist.

5. System nach Anspruch 2, wobei:
- die erste C-RD (18, 18a) einen Funksendeempfänger (24) und eine Leistungsversorgungseinrichtung, PSE, (22) umfasst.

6. System nach Anspruch 2,
wobei das Aushandeln eingeleitet wird, wenn eine der mindestens einen Funkvorrichtung (14) erstmals an das drahtlose Netzwerk angeschlossen wird.

7. Verfahren zur Aushandlung von Leistungszuweisungen, die über ein Ethernet-Kabel von einer ersten Leistungsversorgungseinrichtung, PSE, (60) für eine Funkvorrichtung (14) bereitgestellt werden, wobei das Verfahren umfasst:
Aushandeln durch eine Kaskadenvorrichtung (19) der Leistungszuweisungen von der PSE (60), die für die Funkvorrichtung (14) und die Kaskadenvorrichtung (18, S102) durchgeführt werden; und
Speichern von Leistungszuweisungen, die durch die Funkvorrichtung (14) und die Kaskadenvorrichtung (18, S100) angefordert werden, und Leistungszuweisungen, die für die Funkvorrichtung (14) und die Kaskadenvorrichtung (18, S100) durchgeführt werden, an der Kaskadenvorrichtung (18),
wobei bei Anschluss der Funkvorrichtung (14) das Aushandeln von Leistungszuweisungen für die Funkvorrichtung (14) ein Empfangen einer ersten Nachricht von der Funkvorrichtung (14) umfasst, wobei die erste Nachricht eine Menge von Leistung angibt, die durch die Funkvorrichtung (14, S104) angefordert wird,
wobei das Aushandeln von Leistungszuweisungen für die Funkvorrichtung (14) von der PSE (60) ein Senden einer zweiten Nachricht von der Kaskadenvorrichtung (18) an die erste PSE (60) umfasst, wobei die zweite Nachricht eine Gesamtmenge von Leistung angibt, welche die Menge von Leistung umfasst, die durch die Funkvorrichtung (14, S106) angefordert wird, und
wobei das Aushandeln von Leistungszuweisungen für die Funkvorrichtung (14) von der ersten PSE (60) ferner umfasst:
- Empfangen einer dritten Nachricht von der ersten PSE (60) an der Kaskadenvorrichtung (18), wobei die dritte Nachricht eine zugewiesen Gesamtleistung angibt, die eine der Funkvorrichtung (14) zugewiesene maximale Leistung und eine der Kaskadenvorrichtung (18, S108) zugewiesene maximale Leistung angibt; und
- Senden einer vierten Nachricht von der Kaskadenvorrichtung (18) an die Funkvorrichtung (14) wobei die vierte Nachricht die maximale Leistung angibt, die der Funkvorrichtung (14, S110) zugewiesen wird,
wobei das Aushandeln von Leistungszuweisungen für die Kaskadenvorrichtung (18) und die Funkvorrichtung (14) ein Senden einer angeforderten Gesamtleistungszuweisung an die PSE (60) umfasst, die eine Summe einer durch die Funkvorrichtung (14) angeforderten Leistungszuweisung und einer durch die Kaskadenvorrichtung (18, S104) angeforderten Leistungszuweisung ist, wobei bei Trennung der Funkvorrichtung (14) das Aushandeln von Leistungszuweisungen ein Senden einer aktualisierten angeforderten Gesamtleistungszuweisung an die PSE (60) umfasst, wobei die aktualisierte angeforderte Gesamtleistungszuweisung die angeforderte Gesamtleistungszuweisung minus der der Funkvorrichtung (14, 64) zugewiesenen Leistung umfasst.

8. Verfahren nach Anspruch 7, wobei die Gesamtmenge von Leistung eine angeforderte Menge von Leistung umfasst, die der Kaskadenvorrichtung (18, S106) zugewiesen werden soll.

9. Verfahren nach Anspruch 7, wobei das Aushandeln von Leistungszuweisungen ein Informieren der Funkvorrichtung (14) über die der Funkvorrichtung (14, 58) zugewiesene maximale Leistung umfasst.

10. Verfahren nach Anspruch 7, ferner umfassend bei Trennung der Funkvorrichtung (14) ein Senden einer fünften Nachricht von der Kaskadenvorrichtung (18) an die erste PSE (60), die eine neue Leistungszuweisung von der ersten PSE (60) anfordert.

11. Verfahren nach Anspruch 7, ferner umfassend:
Aufzeichnen von Betriebs-, Verwaltungs- und Wartungs, OAM,-Informationen durch die Kaskadenvorrichtung (18) in Bezug auf eine Konfiguration der Funkvorrichtung (14); und
Senden der OAM-Informationen von der Kaskadenvorrichtung (18) an die Funkvorrichtung (14), wenn die Funkvorrichtung (14) mit der Kaskadenvorrichtung (18) verbunden wird.

12. Computerlesbares Medium, umfassend Codeabschnitte, die bei Ausführung auf einem Prozessor den Prozessor zum Ausführen aller Schritte eines Verfahrens nach einem der vorhergehenden Ansprüche konfigurieren.

## Revendications

1. Premier dispositif radio en cascade, C-RD, (18, 18a), pour un système permettant de fournir de l'énergie sur des câbles Ethernet, PoE, à des dispositifs radio (14) dans un réseau sans fil pour faciliter des communications sans fil d'intérieur, le premier C-RD étant interposé entre au moins un dispositif radio (14) et un organe de commande radio, RC, (19), le C-RD (18, 18a) étant configuré pour négocier une quantité d'énergie à délivrer par le RC (10) à l'au moins un dispositif radio (14),
dans lequel le premier C-RD (18, 18a) est configuré pour négocier une quantité d'énergie à délivrer par le RC (10) à l'au moins un dispositif radio (14) par :
la réception, au premier C-RD (18, 18a), en provenance de l'au moins un dispositif radio (14), d'un premier message, le premier message indiquant une quantité d'énergie demandée par l'au moins un dispositif radio (14) ;
l'envoi, par le premier C-RD (18, 18a), au RC (10), d'un deuxième message, le deuxième message indiquant une quantité totale d'énergie demandée qui est la somme de la quantité d'énergie demandée par l'au moins un dispositif radio (14) et d'une quantité d'énergie demandée par le premier C-RD (18, 18a) ;
la réception, au premier C-RD (18, 18a), en provenance du RC (10), d'un troisième message, le troisième message indiquant une énergie maximale allouée à l'au moins un dispositif radio (14) et une énergie maximale allouée au premier C-RD (18, 18a) ;
la transmission, par le premier C-RD (18, 18a), à destination de l'au moins un dispositif radio (14), d'un quatrième message, le quatrième message indiquant l'énergie maximale allouée à l'au moins un dispositif radio (14) ; et
lorsque l'au moins un dispositif radio (14) est déconnecté, la demande, par le premier C-RD (18, 18a), d'une quantité d'énergie du RC (10) égale à la quantité totale d'énergie demandée moins une quantité d'énergie précédemment demandée par l'un déconnecté de l'au moins un dispositif radio (14).

2. Système permettant de fournir de l'énergie sur des câbles Ethernet, PoE, à des dispositifs radio (14) dans un réseau sans fil pour faciliter des communications sans fil d'intérieur, le système comprenant :
au moins un dispositif radio, RD, (14) ;
un organe de commande radio, RC, (10), configuré pour fournir de l'énergie sur un câble Ethernet à l'au moins un dispositif radio (14) ; et
un premier dispositif radio en cascade, C-RD (18, 18a), selon la revendication 1, interposé entre l'au moins un dispositif radio (14) et le RC (19).

3. Système selon la revendication 2,
comprenant en outre un deuxième C-RD (18, 18b) interposé entre le premier C-RD (18, 18a) et l'au moins un dispositif radio (14), le deuxième C-RD (18, 18b) étant configuré pour négocier une quantité d'énergie à délivrer par le RC (10) à l'au moins un dispositif radio (14) et au deuxième C-RD (18, 18b) par l'intermédiaire du premier C-RD (18, 18a).

4. Système selon la revendication 2,
dans lequel le premier C-RD (18, 18a) inclut en outre un module d'extension d'opération, d'administration et de maintenance, OAM, (28) qui est configuré pour :
l'enregistrement d'informations OAM concernant une configuration de l'au moins un dispositif radio (14) ; et
le transfert des informations OAM à l'au moins un dispositif radio (14) lorsque l'au moins un dispositif radio (14) est connecté au système.

5. Système selon la revendication 2, dans lequel :
- le premier C-RD (18, 18a) inclut un émetteur-récepteur radio (24) et un équipement d'approvisionnement d'énergie, PSE, (22).

6. Système selon la revendication 2,
dans lequel la négociation est lancée lorsque l'un de l'au moins un dispositif radio (14) est connecté en premier au réseau sans fil.

7. Procédé de négociation d'allocations d'énergie fournies par l'intermédiaire d'un câble Ethernet d'un premier équipement d'approvisionnement d'énergie, PSE, (60) à un dispositif radio (14), le procédé comprenant :
la négociation, par un dispositif en cascade (19), des allocations d'énergie du PSE (60) effectuées au dispositif radio (14) et au dispositif en cascade (18, S102) ; et
la mémorisation, au dispositif en cascade (18), d'allocations d'énergie demandées par le dispositif radio (14) et le dispositif en cascade (18, S100), et d'allocations d'énergie effectuées au dispositif radio (14) et au dispositif en cascade (18, S100),
dans lequel, à la connexion du dispositif radio (14), la négociation d'allocations d'énergie au dispositif radio (14) inclut la réception d'un premier message en provenance du dispositif radio (14), le premier message indiquant une quantité d'énergie demandée par le dispositif radio (14, S104),
dans lequel la négociation d'allocations d'énergie au dispositif radio (14) du premier PSE (60) inclut l'envoi, par le dispositif en cascade (18), au premier PSE (60), d'un deuxième message, le deuxième message indiquant une quantité totale d'énergie incluant la quantité d'énergie demandée par le dispositif radio (14, S106), et
dans lequel la négociation d'allocations d'énergie au dispositif radio (14) du premier PSE (60) inclut en outre :
- la réception, au dispositif en cascade (18), en provenance du premier PSE (60), d'un troisième message, le troisième message indiquant une énergie allouée totale incluant une énergie maximale allouée au dispositif radio (14) et une énergie maximale allouée au dispositif en cascade (18, S108) ; et
- la transmission, par le dispositif en cascade (18), à destination du dispositif radio (14), d'un quatrième message, le quatrième message indiquant l'énergie maximale allouée au dispositif radio (14, S110),
dans lequel la négociation d'allocations d'énergie au dispositif en cascade (18) et au dispositif radio (14) inclut l'envoi, au PSE (60), d'une allocation d'énergie demandée totale qui est une somme d'une allocation d'énergie demandée par le dispositif radio (14) et d'une allocation d'énergie demandée par le dispositif en cascade (18, S104), dans lequel, à la déconnexion du dispositif radio (14), la négociation d'allocations d'énergie inclut l'envoi, au PSE (60), d'une allocation d'énergie demandée totale mise à jour, l'allocation d'énergie demandée totale mise à jour incluant l'allocation d'énergie demandée totale moins l'énergie allouée au dispositif radio (14, 64).

8. Procédé selon la revendication 7, dans lequel la quantité totale d'énergie inclut une quantité d'énergie demandée à allouer au dispositif en cascade (18, S106).

9. Procédé selon la revendication 7, dans lequel la négociation d'allocations d'énergie inclut la notification, au dispositif radio (14), de l'énergie maximale allouée au dispositif radio (14, 58).

10. Procédé selon la revendication 7, comprenant en outre, à la déconnexion du dispositif radio (14), l'envoi, par le dispositif en cascade (18), au premier PSE (60), d'un cinquième message demandant une nouvelle allocation d'énergie au premier PSE (60).

11. Procédé selon la revendication 7, comprenant en outre :
l'enregistrement, par le dispositif en cascade (18), d'informations d'opération, d'administration et de maintenance, OAM, concernant une configuration du dispositif radio (14) ; et
l'envoi, par le dispositif en cascade (18), au dispositif radio (14), des informations OAM lorsque le dispositif radio (14) est connecté au dispositif en cascade (18).

12. Support lisible par ordinateur comprenant des portions de code qui, lorsqu'elles sont exécutées sur un processeur, configurent le processeur pour effectuer toutes les étapes d'un procédé selon l'une quelconque des revendications de procédé précédentes.
